# EUROPÄISCHE PATENTSCHRIFT

(11) **EP 0 888 485 B1**
(45) Veröffentlichungstag und Bekanntmachung des Hinweises auf die Patenterteilung: **04.04.2001**
(21) Anmeldenummer: 97918051.0
(22) Anmeldetag: 24.03.1997
(51) Int. Cl.: E04F 21/18, E04G 25/08, E04G 25/06, F16M 11/26, F16B 7/10

(54) **HALTEVORRICHTUNG**
SUPPORT
DISPOSITIF DE SUPPORT

(30) Priorität: 22.03.1996 DE 29605222 U
(43) Veröffentlichungstag der Anmeldung: 07.01.1999
(73) Patentinhaber: Glück, Rainer, 97215 Uffenheim (DE)
(72) Erfinder: Glück, Rainer, 97215 Uffenheim (DE)
(74) Vertreter: Schlagwein, Udo, Dipl.-Ing.
(86) Internationale Anmeldenummer: DE9700593
(87) Internationale Veröffentlichungsnummer: WO9736069

(56) Entgegenhaltungen:
- EP-A- 0 404 745
- DE-A- 3 144 737
- GB-A- 1 463 232
- GB-A- 2 161 139
- US-A- 3 930 645
- US-A- 4 695 028
- US-A- 4 928 916

## Beschreibung

Die Erfindung betrifft eine Haltevorrichtung mit den Merkmalen des Oberbegriffs des Anspruchs 1.

Eine Haltevorrichtung für Gegenstände wie Deckenplatten, Dachlatten, Maschinenteile oder dergleichen, bestehend aus wenigstens zwei teleskopierenden Rohren, wobei ein erstes Rohr im Verhältnis zum zweiten Rohr um einen ersten Weg verschiebbar ist und eine Gasdruckfeder vorhanden ist, um das erste Rohr im Verhältnis zum zweiten Rohr um einen weiteren Weg zu transportieren und wobei weiter Arretiermittel für die Rohre gegeneinander und Endanschläge an den Rohren vorhanden sind, ist bekannt (unveröffentlichte Deutsche Patentanmeldung 195 29 989). Mit dieser Vorrichtung können z.B. Gipskartonplatten an der Decke gehalten werden, bis sie festgeschraubt oder festgenagelt sind. Unvorteilhaft ist hier, daß zum Lösen der Haltevorrichtung die Gasfeder gegen den gehaltenen Gegenstand gedrückt und eingeschoben werden muß, und daß das Halten stets mit der gleichen Kraft erfolgt.

In US-A-3,930,645 ist eine Stütze beschrieben, bei welcher in einem Rohr eine Feder vorgesehen ist, die in diesem Rohr gelagert ist und mit einem Ende auf eine Platte einer auszufahrenden Stange drückt. Die Stange ist bei gespannter Feder mittels einer Klemmplatte arretierbar. Wird die Klemmplatte gelöst, so entspannt sich die Feder und fährt die Stange aus. Hierfür ist die Klemmplatte mit einem Schwenkhebel verbunden. Ferner ist ein zweiter Schwenkhebel am gegenüberliegenden Stützenende vorgesehen, wobei beide Schwenkhebel über eine Zugstange miteinander verbunden sind, so daß die Betätigung des unmittelbar mit der Klemmplatte verbundenen Hebels über den entfernten Hebel möglich ist.

Schließlich ist in DE-A-31 44 737 eine Stütze beschrieben, bei welcher zwei teleskopierende Rohre vorgesehen sind, die über einen Zahnradmechanismus bezüglich einander bewegt werden können. Hierzu sind an zwei entgegengesetzten Seiten des unteren Außenteils jeweils ein drehbares Zahnrad angeordnet, dessen Zähne durch eine Längsausnehmung des Außenteils hindurchgreift. Am im Außenteil verschiebbaren Innenteils ist eine Vielzahl von Löchern vorgesehen, die derart voneinander beabstandet sind, daß die Zähne eines jeweiligen Zahnrads eingreifen können. Werden die Zahnräder mittels eines geeigneten Handrads gedreht, so wird das Innenteil ausgefahren und eingeschoben.

Aufgabe der vorliegenden Erfindung ist es, eine Haltevorrichtung der eingangs genannten Art zu schaffen, die ein einfacheres Lösen ermöglicht und mittels der die Anpreßkraft in bestimmten Schritten regulierbar ist.

Diese Aufgabe wird mit einer Vorrichtung mit den im Anspruch 1 genannten Merkmalen gelöst. Fortbildungen und vorteilhafte Ausführungen der Erfindung sind in den weiteren Ansprüchen umfaßt.

Erfindungsgemäß bestehen die Mittel zum weiteren Transport des ersten Rohres aus einer mit einem von Hand zu betätigendem Vorschubmittel versehenen Ratsche, Zahnstange, Klemmhalterung oder dergleichen. Das erste Rohr kann auch eine runde, eckige oder flache Stange sein. Der Einfachheit halber wird im folgenden von zwei Rohren gesprochen.

In dem zweiten Rohr ist eine mit diesem verbundene Gasdruckfeder oder Schraubenfeder für den Transport des ersten Rohres um den ersten Weg angeordnet. Der erste Weg bringt den Endanschlag in Anschlag an den zu haltenden Gegenstand. Der weitere Weg wird dann, wie bei der zuvor genannten Ausführung durch Betätigung der Vorschubmittel zurückgelegt, wobei dieser Weg gering ist und dem Festklemmen des Gegenstands z.B. an einer Decke dient. Hierfür ist auf dem oberen Ende des zweiten Rohres ein Griffstück fest mit diesem verbunden angeordnet, an oder in dem die Vorschub-, Halte- und/oder Klemmmittel für die Ratsche, Zahnstange, Klemmhalterung oder dergleichen angeordnet sind.

An dem Griffstück kann bei der ersten Ausführung der Erfindung auch eine Klinke, Anschlag oder dergleichen für das Halten der Gasdruck-, oder Schraubenfeder im zusammengedrückten Zustand angeordnet sein. Bei dieser Ausführung wird zunächst die Klinke gelöst und das erste Rohr fährt bis zum Anschlag Stück aus dem zweiten Rohr aus. Der weitere Weg wird dann wie bei der zweiten Ausführung der Erfindung durch Betätigen der Vorschubmittel zurückgelegt.

Vorteilhafterweise sind an den Rohren bzw. der Stange Endanschläge vorgesehen, die als auf Kugelgelenken gelagerte Teller oder dergleichen ausgebildet sind, wobei die Teller abnehmbar und auch gegen andere Haltemittel wie Latten oder Kreuze auswechselbar. Es sind auch Haltemittel einsetzbar, die durch Anliegen an dem ersten Rohr ein Kippen oder Neigen des Kugelgelenks verhindern.

Nach einer bevorzugten Ausführung der Erfindung teleskopiert das zweite Rohr in einem dritten Rohr, wobei Mittel zum Feststellen der beiden Rohre gegeneinander vorhanden sind. Das erste Rohr oder die Stange teleskopiert in dem zweiten Rohr, wobei selbsttätige Mittel für einen ersten Transportweg des ersten Rohres oder der Stange in dem zweiten Rohr angeordnet sind und wobei am oberen Ende des zweiten Rohres ein handbetätigtes Griffstück mit Klemm- und Vorschubmitteln für einen zweiten Transportweg des ersten Rohres oder der Stange angeordnet ist.
Die Mittel zum weiteren Transport des ersten Rohres oder der Stange Können an und in dem zweiten Rohr angeordnet sein.

Nach einer dritten Ausführung der Erfindung ist in dem zweiten Rohr oben eine erste federbeaufschlagte Klemmhalterung für das erste Rohr oder die Stange angeordnet, die durch einen aus dem Rohr geführten Hebel lösbar ist, wodurch die sich unten im zweiten Rohr abstützende Schraubenfeder entspannen und das erste Rohr oder die Stange ausfahren lassen kann. Die Schraubenfeder stützt sich an ihrem unteren Ende auf einer auf einem Anschlag im zweiten Rohr gelagerten zweiten Klemmhalterung für das erste Rohr oder die Stange ab, die mittels eines zweiten Hebels in eine Klemmstellung bringbar ist und so einen Schrittvorschub für das erste Rohr oder die Stange bewirkt. Im eingefahrenen Zustand ist die Schraubenfeder gespannt und die erste Klemmhalterung, die von oben durch eine Feder beaufschlagt ist, klemmt das erste Rohr oder die Stange. Wird diese Klemmposition durch Betätigen eines Hebels aufgelöst, entspannt sich die Schraubenfeder und fährt das erste Rohr oder die Stange über einen Mitnehmer aus. Danach wird über einen zweiten Hebel die zweite Klemmhalterung in Klemmstellung gebracht und dadurch ein weiterer, geringer Vorschub des ersten Rohres, bzw. der Stange bewirkt.

Vorteilhafterweise weist die Haltevorrichtung einen federbeaufschlagten Längenausgleich auf. Der Längenausgleich ist vorzugsweise eine über ein Ende der Haltevorrichtung greifende Hülse, auf die eine sich an der Haltevorrichtung abstützende Feder wirkt, wobei die Hülse endseitig fest mit einem Endanschlag verbunden ist.

Im folgenden wird die Erfindung anhand von Zeichnungen beispielhaft näher beschrieben. Dabei zeigen:
Fig. 1 einen Ausschnitt einer ersten Ausführungsform einer erfindungsgemäßen Haltevorrichtung;
Fig. 2 einen Schnitt entlang der Linie A - B von Fig. 1;
Fig. 3 die ganze erste Ausführungsform einer Haltevorrichtung;
Fig. 4 einen Ausschnitt einer dritten Ausführungsform einer erfindungsgemäßen Haltevorrichtung;

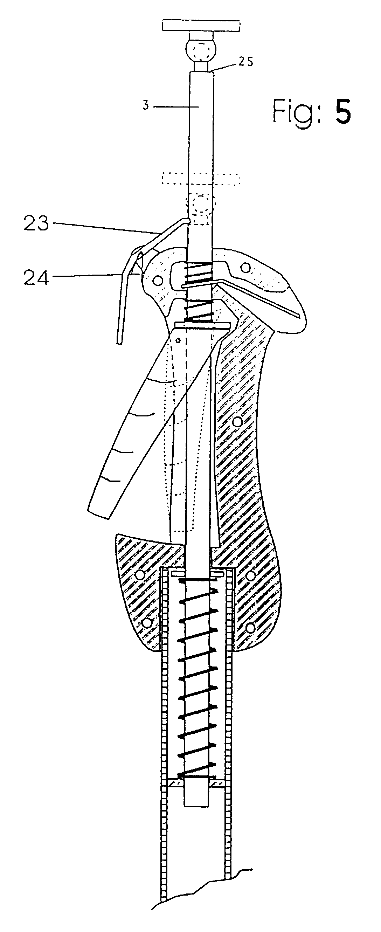

Fig. 5 einen Ausschnitt einer vierten Ausführungsform einer erfindungsgemäßen Haltevorrichtung;
Fig. 6 eine dritte Ausführungsform der erfindungsgemäßen Haltevorrichtung.

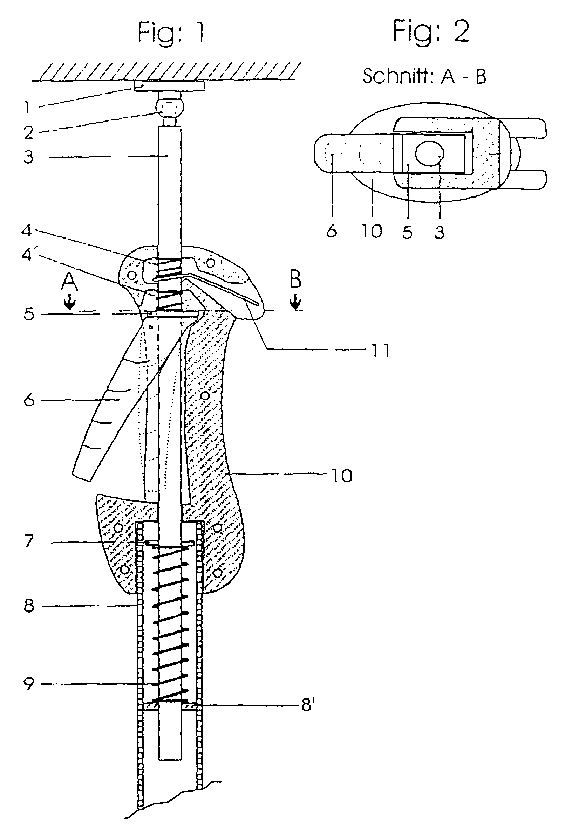

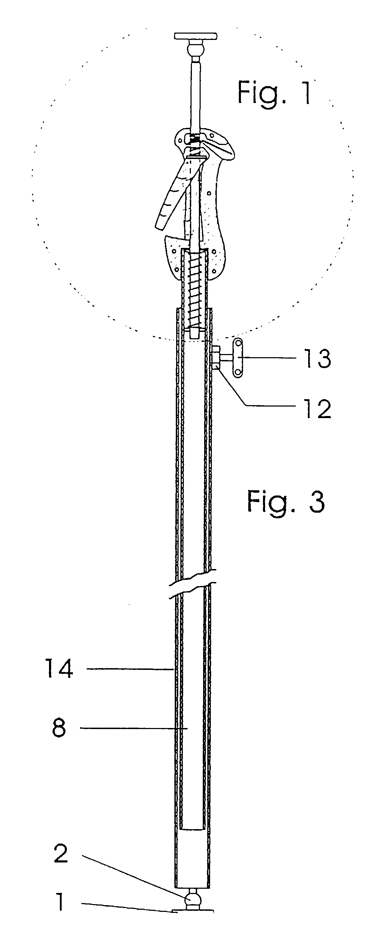

Die Haltevorrichtung gemäß den Fig. 1 - 3 besteht aus einem äußeren dritten Rohr 14, in dem ein zweites Rohr 8 teleskopiert. Beide sind gegeneinander über eine in einer Mutter 12 laufenden Flügelschraube 13 feststellbar. Wie in Fig. 1 näher dargestellt, teleskopiert eine Stange 3 in dem zweiten Rohr 8. Das zweite Rohr 8 weist an seinem oberen Ende ein Griffstück 10 auf, das mit dem Rohr 8 fest verbunden ist. Das Griffstück 10 ist mit einem Durchgang für die Stange 3 versehen, in dem diese axial verschoben werden kann. Die Stange 3 ist in dem Rohr 8 auf einer Spiralfeder 9 gelagert, die sich auf einem Boden 8' in dem Rohr 8 nach unten abstützt und als oberen Anschlag einen Splint 7 besitzt, der horizontal durch eine Bohrung in der Stange 3 geführt ist. An seinem oberen Bereich weist das Griffstück 10 Vorschub- und Klemmmittel für die Stange 3 auf. Das Vorschubmittel besteht aus einem am Griffstück in einer seitlichen Ausnehmung gelagertem Vorschubhebel 6, auf dem eine Klemmplatte 5 aufliegt, die eine Bohrung für die Stange 3 aufweist und axial von oben durch eine Druckfeder 4' beaufschlagt ist, die um die Stange 3 angeordnet ist und sich oberhalb der Klemmplatte 5 an dem Griffstück 10 abstützt. In der in Fig 1 gezeigten Position drückt die Druckfeder 4' auf die Klemmplatte 5 und damit den Vorschubhebel 6 auswärts. Der Vorschub der Stange 3, der nur erfolgen kann, wenn die Spiralfeder 9, bzw. der Splint 7 nicht in Endstellung, sondern, wie in Fig. 1 gezeigt, darunter ist, erfolgt in an sich bekannter Weise dadurch, daß der Vorschubhebel 6 einwärts gedrückt wird, wodurch die Klemmplatte 5 durch Schrägstellung das Rohr 3 klemmt und dieses einen Schritt nach oben schiebt. Wird der Vorschubhebel 6 dann losgelassen, wird die Klemmwirkung aufgehoben und die Druckfeder 4' entspannt sich und drückt die Klemmplatte 5 und den Vorschubhebel 6 zurück in die Ausgangsposition. Die Stange 3 wird in der erreichten Stellung durch einen Klemmhebel 11 gehalten, der in einer Ausnehmung im Griffstück 10 oberhalb der Ausnehmung für den Vorschubhebel 6 angeordnet ist. Der Klemmhebel 11 weist eine Bohrung für die Stange 3 auf und ist in einer schräggestellten, die Stange klemmenden Position in der Ausnehmung gelagert und von einer zweiten Druckfeder 4 beaufschlagt, die um die Stange 3 angeordnet ist und sich oberhalb des Klemmhebels 11 im Griffstück 10 abstützt. Um die Klemmwirkung aufzuheben, ist der Klemmhebel 11 gegen die Kraft der Feder 4 so zu schwenken, daß der Teil des Klemmhebels 11, das die Bohrung für die Stange 3 aufweist eine annähernd horizontale Position erreicht und die Stange 3 freigibt. Die Stange 3 kann dann zurückgeschoben werden. Der axiale Schub durch den Vorschubhebel 6 nach oben überwindet die Reibkraft des Klemmhebels 11 während des Vorschubschritts. Wie in Fig. 1 gezeigt, weist die Haltevorrichtung an ihren beiden Enden, d.h. am ersten Rohr 14 und an der Stange 3 Kugelgelenke 2 auf, auf denen Abstützteller kardanisch gelagert sind. Die Arbeitsweise erfolgt so, daß das zweite Rohr 8 gegenüber dem dritten Rohr 14 voreingestellt wird, so daß bei Lösen der Spiralfeder 9 die Stange 3 ausfährt und der Teller 1 kommt zum Anliegen an der Decke. Danach wird durch Betätigen des Vorschubhebels 6 der Teller mit der erwünschten Kraft gegen die Decke gepreßt. Der Vorschub kann hierbei minimal sein.

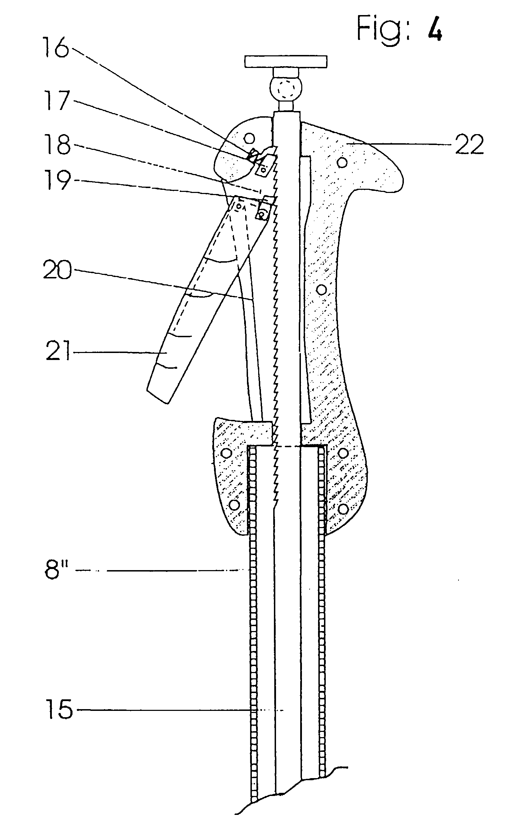

Die Fig. 4 zeigt eine alternative Ausführung des Griffstücks 22 mit dem Schrittvorschub für die Stange 15, die hier als Zahnstange mit schräg nach unten gerichteten Zähnen ausgeführt ist. Auch hier ist ein Vorschubhebel 21 vorhanden, der in einer Ausnehmung des fest mit dem Rohr 8'' verbundenen Griffstücks 22 gelagert ist. Der Vorschubhebel 21 wird von einer Schenkelfeder 20, die sich seitlich an dem Griffstück 22 abstützt, nach außen gedrückt und weist an seinem oberen Ende einen Vorschubzahn 19 auf, der an der steilen Flanke eines Zahns der Zahnstange anliegt. Wird der Vorschubhebel 21 einwärts gedrückt, schiebt der Vorschubzahn 19 die Zahnstange 15 nach oben. Die Zahnstange 15 wird in dieser Position von einem Rastzahn 17 gehalten, der beaufschlagt von einer im Griffstück 22 gelagerten Druckfeder 16 radial gegen die Zahnstange drückt und an der steilen Flanke eines Zahns der Zahnstange 15 anliegt. Bei dieser Ausführung wird die Stange 15 zunächst von Hand herausgezogen, bevor der Vorschubhebel 21 für einen letzten Weg, bzw. zum Festklemmen des zu haltenden Gegenstandes betätigt wird. Zum Zurückschieben der Zahnstange 15 muß diese soweit gedreht werden, daß der Rastzahn 17 und der Vorschubzahn 19 außer Eingriff mit den Zähnen der Zahnstange 15 kommen.

Fig, 5 zeigt ein Griffstück wie Fig. 1, jedoch ist dieses mit einer Klinke 23 versehen, die die Stange 3 an ihrer Oberkante 25 im eingezogenen Zustand hält. Die Klinke 23 kann durch Druck auf die Taste 24 gelöst werden.

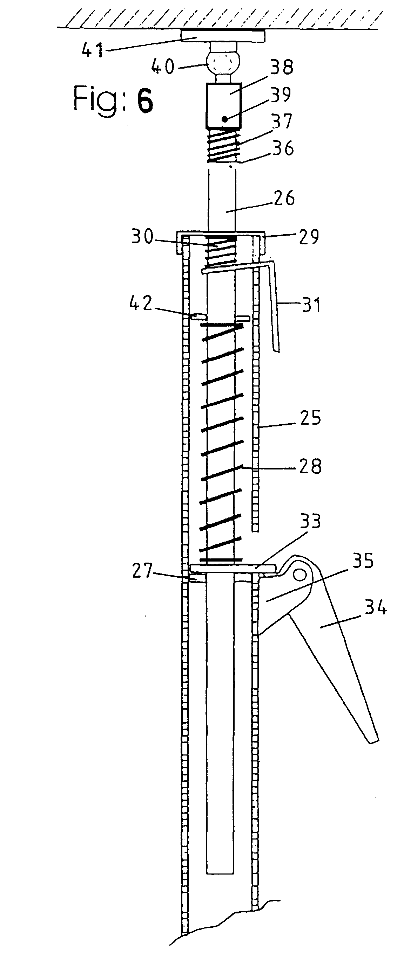

Fig. 6 zeigt eine dritte Ausführungsform der Haltevorrichtung. Hier teleskopiert eine Stange 26, wie bei den anderen Ausführungen, in einem Rohr 25. Der Mechanismus für den ersten und den zweiten Transportweg befindet sich jedoch vollständig in dem zweiten Rohr 25 und das separate Griffstück entfällt. In dem zweiten Rohr 25 befindet sich ein Stützanschlag 27, auf dem eine Klemmplatte 33 aufliegt, auf der sich wiederum die Schraubenfeder 28 abstützt, die den weiteren Transportweg der Stange 26 bewirkt. Hierzu ist die Stange 26 im Inneren des Rohres 25 mit einem Splint 42 oder dergleichen versehen. Vor der Benutzung der Haltevorrichtung ist die Stange 26 in das Rohr 25 eingeschoben und die Schraubenfeder 28 ist zusammengedrückt. Die Stange 26 wird in dieser Position durch einen Klemmhebel 31 gegen die Kraft der Feder 28 gehalten. Der Klemmhebel 31 ist in bekannter Weise mit einer Bohrung versehen und liegt in der gezeigten Schräglage klemmend an der Stange 26 an. In dieser Position wird der Klemmhebel 31 von einer Schraubenfeder 30 gehalten, die sich an einem Überwurf 29 des Rohres 25 oben abstützt und von oben auf den Klemmhebel wirkt. Die hier ausgebübte Klemmkraft ist höher, als die dagegen wirkende Kraft der Schraubenfeder 28. Der Klemmhebel 31 ist nach außen geführt und kann von Hand um einen Drehpunkt gegen die Kraft der Feder 30 in eine gerade Position gebracht werden, in der die Klemmwirkung aufgehoben wird, weil die Bohrung des Klemmhebels so ausgelegt ist, daß dieser dann nicht mehr klemmend an der Stange 26 anliegt. Jetzt entspannt sich die Schraubenfeder 28 und fährt die Stange 26 um einen ersten Transportweg aus. Die untere Klemmplatte 33, die in der gleichen Weise wirkt, wie der Klemmhebel 31 liegt nicht klemmend auf dem Stützanschlag auf. Die Klemmplatte 33 ist aus dem Rohr nach außen geführt und liegt auf einer Nase eines schwenkbar an dem Rohr 35 gelagerten Hebels 34 auf. Wird der Hebel 34 zum Rohr 25 hin gedrückt, bewegt sich die Nase nach oben und die Klemmplatte wird in eine Schräglage gebracht, in der sie klemmend an der Stange 26 anliegt. Durch weiteres Bewegen des Hebels 34 auf das Rohr 25 zu, wird die Stange 26 je nach Auslegung der Nase des Hebels 34 um einen weiteren, weitaus geringeren Weg nach oben transportiert. Hierbei ist die Kraft der oberen Feder 30 zu überwinden, die die Stange 26 nach loslassen des Hebels 34 in der vorgeschobenen Position hält. Auch bei dieser Ausführung kann das zweite Rohr 25 in einem dritten Rohr teleskopieren und arretiert werden und dadurch voreingestellt werden.

Bei dieser dritten Ausführung ist ein zuätzlicher Längenausgleich gezeigt, der auch bei den anderen Ausführungen verwendbar ist, und der z.B. ein leichtes Nachgeben des Untergrunds ausgleichen soll. Der Längenausgleich besteht aus einer Hülse 38, die über das Ende der Stange 26 geworfen ist. Die Hülse 38 wird von einer Feder 37 beaufschlagte, die sich auf einem Splint 36 oder dergleichen in der Stange 26 abstützt. Auf ihrem geschlossenen Ende trägt die Hülse 38 das Kugelgelenk 40 mit dem Teller 41. Die Hülse 38 ist mit einem Stift 39 gegen Verlieren gesichert. Gibt der Untergrund nach, entspannt sich die Feder 37 und drückt die Hülse 38 ein Stück nach oben.

## Patentansprüche

1. Haltevorrichtung für Gegenstände wie Deckenplatten, Dachlatten, Maschinenteile oder dergleichen, bestehend aus wenigstens zwei teleskopierenden Rohren oder einer in wenigstens einem Rohr (8) teleskopierenden Stange (3), wobei ein erstes Rohr oder die Stange (3) im Verhältnis zum zweiten Rohr (8) verschiebbar sind, und wobei Arretiermittel für die Rohre bzw. das Rohr und die Stange gegeneinander vorgesehen sind, dadurch gekennzeichnet, daß das erste Rohr oder die Stange (3) im Verhältnis zum zweiten Rohr (8) um einen ersten und einen zweiten Weg transportierbar sind, wobei für den Transport um den ersten Weg eine in dem zweiten Rohr (8) angeordnete, mit diesem verbundene Gasdruckfeder oder Schraubenfeder (9) vorgesehen ist, und wobei für den Transport um den zweiten Weg eine mit einem von Hand zu betätigenden Vorschubmittel versehene Ratsche, Zahnstange, Klemmhalterung oder dergleichen vorgesehen ist.

2. Haltevorrichtung nach Anspruch 1, dadurch gekennzeichnet, daß auf dem oberen Ende des zweiten Rohres (8) ein Griffstück (10) fest mit diesem verbunden angeordnet ist, und daß an oder in dem Griffstück (10) Vorschub-, Halte- und/oder Klemmittel für die Ratsche, Zahnstange, Klemmhalterung oder dergleichen angeordnet sind.

3. Haltevorrichtung nach Anspruch 2, dadurch gekennzeichnet, daß an dem Griffstück (10) eine Klinke (23) oder dergleichen für das erste Rohr oder die Stange (3) zum Halten der Gasdruck- oder Schraubenfeder (9) im zusammengedrückten Zustand angeordnet ist.

4. Haltevorrichtung nach einem der vorangehenden Ansprüche, dadurch gekennzeichnet, daß an den Rohren bzw. der Stange Endanschläge vorgesehen sind, die als auf Kugel- oder Gummigelenken gelagerte Teller (1) oder dergleichen ausgebildet sind.

5. Haltevorrichtung nach Anspruch 4, dadurch gekennzeichnet, daß die Teller (1) abnehmbar und gegen andere Haltemittel auswechselbar sind.

6. Haltevorrichtung nach einem der vorhergehenden Ansprüche, dadurch gekennzeichnet, daß das zweite Rohr (8) in einem dritten Rohr (14) teleskopiert,
wobei Mittel zum Feststellen der beiden Rohre (8, 14) gegeneinander vorhanden sind,
daß das erste Rohr oder die Stange (3) in dem zweiten Rohr (8) teleskopiert;
daß selbsttätige Mittel für einen ersten Transportweg des ersten Rohres oder der Stange (3) in dem zweiten Rohr (8) angeordnet sind;
und daß am oberen Ende des zweiten Rohres (8) ein handbetätigtes Griffstück (10) mit Klemm- und Vorschubmitteln für einen zweiten Transportweg des ersten Rohres oder der Stange (3) angeordnet ist.

7. Haltevorrichtung nach Anspruch 1, dadurch gekennzeichnet, daß die Mittel zum weiteren Transport des ersten Rohres oder der Stange (26) an und in dem zweiten Rohr (25) angeordnet sind.

8. Haltevorrichtung nach Anspruch 7, dadurch gekennzeichnet, daß in dem zweiten Rohr (25) oben eine erste federbeaufschlagte Klemmhalterung (31) für das erste Rohr oder die Stange (26) angeordnet ist, die durch einen aus dem Rohr geführten Hebel (31) lösbar ist, und daß die Schraubenfeder (28) sich an ihrem unteren Ende auf einer auf einem Anschlag (27) gelagerten zweiten Klemmhalterung (33) für das erste Rohr oder die Stange (26) abstützt, die mittels eines zweiten Hebels (34) in eine Klemmstellung bringbar ist und so einen Schrittvorschub für das erste Rohr oder die Stange (26) bewirkt.

9. Haltevorrichtung nach einem der vorhergehenden Ansprüche, dadurch gekennzeichnet, daß die Haltevorrichtung einen federbeaufschlagten Längenausgleich aufweist.

10. Haltevorrichtung nach Anspruch 9, dadurch gekennzeichnet, daß der Längenausgleich eine über ein Ende der Haltevorrichtung greifende Hülse (38) auf die eine sich an der Haltevorrichtung abstützende Feder (37) wirkt, wobei die Hülse endseitig fest mit einem Endanschlag verbunden ist.

## Claims

1. Support device for objects such as ceiling panels, roof battens, machine components, or similar, comprising at least two telescoping tubes, or a post (3) telescoping in at least one tube (8), wherein a first tube or post (3) is extendable in relation to the second tube (8), and wherein means are provided for locking the tubes, or as the case may be the tube and post, to each other, characterized in that the first tube or post (3) is displaceable in relation to the second tube (8) over first and second travels, a gas pressure spring or coil spring (9) being provided inside, and connected to, the second tube (8) for the displacement over the first travel, and a ratchet, toothed rod, jammer, or similar, fitted with hand-operated extending means, being provided for the displacement over the second travel.

2. Support device according to Claim 1. characterized in that a handgrip (10) is fixedly connected to the upper end of the second tube (8), and in that extending, catching and/or jamming means for the ratchet, toothed rod, jammer or similar are arranged on or in the handgrip (10).

3. Support device according to Claim 2, characterized in that a latch (23) or similar for the first tube or post (3) is arranged on the handgrip (10) to keep the gas pressure spring or coil spring (9) in the compressed condition.

4. Support device according to any one of the preceding claims, characterized in that end pads formed e.g. as plates (1) mounted on ball or rubber joints are provided on the tubes, or on tube and post.

5. Support device according to Claim 4, characterized in that the plates (1) are removable and exchangeable with other supporting means.

6. Support device according to any one of the preceding claims, characterized in that the second tube (8) telescopes inside a third tube (14), means being provided for fixing the two tubes (8, 14) to each other; in that the first tube or post (3) telescopes inside the second tube (8); in that automatic means for a first travel of the first tube or post (3), are arranged inside the second tube (8); and in that a hand-operated handgrip (10) with jamming and extending means for a second travel of the first tube or post (3) is arranged at the upper end of the second tube (8).

7. Support device according to Claim 1, characterized in that the means for the further travel of the first tube or post (26) are arranged on and in the second tube (25).

8. Support device according to Claim 7, characterized in that a first spring-loaded jammer (31) for the first tube or post (26) is arranged in the top of the second tube (25) and is releasable by a lever (31) led out through the tube, and in that the coil spring (28) bears at its lower end on a second jammer (33), carried on a stop (27), for the first tube or post (26), the said second jammer being placeable in a jamming position by means of a second lever (84) and thus effecting a step extension of the first tube or post (26).

9. Support device according to any one of the preceding claims, characterized in that the support device has spring-loaded length compensation.

10. Support device according to Claim 9, characterized in that length compensation [is provided by] a sleeve (38) engaging over one end of the support device and acted on by a spring (37) which bears on the support device, the end of the sleeve being fixedly connected to an end pad.

## Revendications

1. Dispositif de soutien pour objets tels que des dalles de plafond, des lattes de toit, des parties de machines ou analogues, composé d'au moins deux tubes coulissants télescopiquement ou d'une tige (3) qui coulisse télescopiquement dans au moins un tube (8), dans lequel un premier tube ou la tige (3) peut coulisser par rapport au deuxième tube (8) et dans lequel il est prévu des moyens de blocage mutuel pour les tubes ou pour le tube et la tige, caractérisé en ce que le premier tube ou la tige (3) peut être déplacé par rapport au deuxième tube (8) sur une première course et sur une deuxième course, un ressort à pression de gaz ou un ressort hélicoïdal (9) disposé dans le deuxième tube (8) et solidaire de celui-ci étant prévu pour le déplacement sur la première course, tandis que, pour le déplacement sur la deuxième course, il est prévu un encliquetage, une crémaillère, une fixation à serrage ou analogue équipé d'un moyen d'avance à actionner à la main.

2. Dispositif de soutien selon la revendication 1, caractérisé en ce que, sur l'extrémité supérieure du deuxième tube (8), est disposée une poignée (10) rigidement solidaire de cette extrémité et en ce que, sur ou dans la poignée (10), sont agencés des moyens d'avance, de retenue et/ou de serrage pour l'encliquetage, la crémaillère, la fixation à serrage ou analogue.

3. Dispositif de soutien selon la revendication 2, caractérisé en ce que, sur la poignée (10) est disposé un cliquet (23) ou analogue pour le premier tube ou pour la tige (3), destiné à maintenir le ressort à pression de gaz ou hélicoïdal (9) dans l'état comprimé.

4. Dispositif de soutien selon l'une des revendications précédentes, caractérisé en ce que, sur les tubes ou sur la tige, sont prévues des butées d'extrémité qui sont constituées par des plaques (1) ou analogues montées sur des articulations à rotule ou en caoutchouc.

5. Dispositif de soutien selon la revendication 4, caractérisé en ce que les plaques (1) sont amovibles et peuvent être interchangées avec d'autres moyens de soutien.

6. Dispositif de soutien selon l'une des revendications précédentes, caractérisé en ce que le deuxième tube (8) coulisse télescopiquement dans un troisième tube (14),
cependant qu'il est prévu des moyens pour immobiliser les deux tubes (8, 14) l'un par rapport à l'autre,
en ce que le premier tube ou la tige (3) coulisse télescopiquement dans le deuxième tube (8) ;
en ce que des moyens automatiques pour une première course de déplacement du premier tube ou de la tige (3) sont agencés dans le deuxième tube (8) ;
et en ce qu'à l'extrémité supérieure du deuxième tube (8) est agencée une poignée (10) actionnée à la main, munie de moyens de serrage et d'avance pour une deuxième course de déplacement du premier tube ou de la tige (3).

7. Dispositif de soutien selon la revendication 1, caractérisé en ce que les moyens prévus pour la suite du déplacement du premier tube ou de la tige (26) sont agencés sur et dans le deuxième tube (25).

8. Dispositif de soutien selon la revendication 7, caractérisé en ce que, dans le deuxième tube (25) est disposée, en position haute, une première fixation à serrage (31) sollicitée par ressort pour le premier tube ou pour la tige (26), fixation qui peut être débloquée par un levier (31) passant en dehors du tube, et en ce que le ressort hélicoïdal (28) prend appui à son extrémité inférieure sur une deuxième fixation à serrage (33) pour le premier tube ou pour la tige (26), qui est montée sur une butée (27), cette fixation pouvant être placée dans une position de serrage au moyen d'un deuxième levier (34) et déterminant ainsi une avance par pas pour le premier tube ou pour la tige (26).

9. Dispositif de soutien selon l'une des revendications précédentes, caractérisé en ce que le dispositif de soutien présente une compensation de longueur sollicitée par ressort.

10. Dispositif de soutien selon la revendication 9, caractérisé en ce que la compensation de longueur comprend une douille (38) qui emboîte une extrémité du dispositif de soutien et sur laquelle agit un ressort (37) qui prend appui sur le dispositif de soutien, la douille étant rigidement solidaire d'une butée d'extrémité à son extrémité.
